Europäisches Patentamt

(19) European Patent Office

Office européen des brevets

(11) Publication number: **0 336 929 B1**

# (12) EUROPEAN PATENT SPECIFICATION

(45) Date of publication of patent specification :
21.08.91 Bulletin 91/34

(51) Int. Cl.$^5$ : **C02F 3/30**

(21) Application number : 87907456.5

(22) Date of filing : 04.11.87

(86) International application number :
**PCT/SE87/00516**

(87) International publication number :
**WO 88/03515 19.05.88 Gazette 88/11**

(54) METHOD FOR WATER PURIFICATION.

(30) Priority : 04.11.86 SE 8604710

(43) Date of publication of application :
18.10.89 Bulletin 89/42

(45) Publication of the grant of the patent :
21.08.91 Bulletin 91/34

(84) Designated Contracting States :
DE FR GB NL

(56) References cited :
DK-B- 129 511
Chemical Abstract, Vol 94 (1981), abstract No
94:126802x "Potential for Brewery wastes as
an alternative to methanol for denitrification in
Hong Kong" Everest, William R; Lake, Charles
W; Crafts Colleen M (USA). Argonne Natl Lab
Energy Environ Syst Div, (Tech Rep),
ANL/EES-TM 1980, ANL/EES-TM-96, Vol 1,
Proc US Dep. Energy. Energy Optim Water
Wastewater Manage Munic Ind Appl Conf
1979, 273-81 (Eng)

(56) References cited :
Chemical Abstracts, Vol 103 (1985), abstract
No 103:26623a "Dentrification - efficiencies of
alternate carbon sources "Kaplan, D L Riley,
P A; Pierce J; Kaplan A M, Report 1984,
NATICK TR-85/003, Order No AD-
A148029/2/GAR, 35pp (Eng)
Chemical Abstracts Vol 96 (1982), abstract No
96:204807k "Industrial wastes as carbon sour-
ces in biological dentrification" Skrinde
James R; Bhagat, Surinder K (Washington
State Unive Pullman, WA USA) : J - Water
Pollut Control Fed 1982, 54(4), 370-7 (Eng).
Institutet för Vatten - och Luftvardsforskning,
page 9, published Stockholm October 1981,
(JONAS NORRMAN) "Anaerob rening - en
statusrapport

(73) Proprietor : SVERIGES
STÄRKELSEPRODUCENTER, FÖRENING UPA
S-291 91 Kristianstad (SE)

(72) Inventor : HANSSON, Bengt
Oröd
S-280 60 Broby (SE)

(74) Representative : Wiklund, Erik et al
AWAPATENT AB Box 5117
S-200 71 Malmö (SE)

EP 0 336 929 B1

## Description

The present invention relates to a method for water purification with removal of dissolved nitrogen by denitrification.

Present-day sewage treatment plants are designed in different ways, depending on the required type and degree of purification. Many include a mechanical, a biological and a chemical purification step. In the mechanical step, solid impurities are removed by pre-treatment in the form of e.g. screening and filtration and subsequent sedimentation. In the biological step, the mechanically purified sewage is subjected to the action of microorganisms in an aerobic and, optionally, anaerobic environment. The chemical step comprises precipitation reactions for removing e.g. material containing phosphorus, and disinfection by, for example, chlorination. In each purification step, the undesirable, removed material is settled and conducted as sludge to the subsequent sludge treatment step.

One of today's major environmental problems is the discharge, for example by sewage, of dissolved nitrogen into waters such as lakes and seas. The excessive nitrogen content causes lack of oxygen in the water, which results in extermination of the bottom vegetation. Since this extermination has lately been spreading increasingly, it has been decided that immediate measures should be taken so as to cope with this serious problem. One of these measures implies that the sewage treatment plants should be adapted for the reduction of nitrogen, and a reduction of at least 80% has been discussed.

The reduction of nitrogen is carried out in the biological step of the sewage treatment plant. The sewage initially contains large amounts of bacteria, such as nitrification bacteria and denitrification bacteria. In the aerobic zone of the biological purification step, appropriate conditions promoting the effect of the nitrification bacteria are maintained. These bacteria convert nitrogen in the form of ammonium into nitrogen in the form of nitrate via an intermediate form of nitrite. Subsequently, the denitrification bacteria are allowed to act on the sewage in an anaerobic zone, the nitrogen in the form of nitrate being converted into nitrogen gas which can then readily be discharged into the atmosphere. In contrast to the nitrification step, the denitrification step is strongly dependent on carbon as a substrate source for the denitrification bacteria. A problem in this context is that the amount of carbonaceous material in the sewage is inadequate to denitrify nitrogen in the form of nitrate to a sufficient extent. This means that an external carbon source must be added as a substrate for the denitrification bacteria. Experiments have been carried out with carbon sources such as methanol, acetone etc., which, however, have turned out to be far too expensive and toxic and too slowly biodegradable to be really useful. It would therefore be valuable if one could find a cheap, innocuous and easily accessible and biologically degradable product to be used as a carbonaceous substrate, instead of the expensive synthetic substrates.

A major problem in a completely different field is the difficulty in finding a profitable market for the starch from the present surplus production in the starch industry. It would therefore be highly convenient if the surplus starch could be used as a carbonaceous substrate for the denitrification bacteria so as to reduce the nitrogen content of the sewage in a biological purification step. Experiments with native starch have proved, however, that it is not sufficiently accessible as a carbon source for denitrification bacteria.

The present invention has now succeeded in eliminating the above-mentioned drawbacks by adding modified starch, i.e. starch having a structure different from that of native starch, as a carbonaceous substrate for denitrification bacteria. Such modified starch has proved to be eminently suitable as a carbonaceous substrate for denitrification bacteria since it has a high bacteriological accessibility and is innocuous from the environmental point of view, and also inexpensive and easily available.

According to the present invention, a method for water purification with removal of nitrogen-containing material by denitrification is provided, which is characterised in that native starch is modified, and the modified starch is added in an amount giving a weight ratio of carbon to nitrogen of at least 1.3 : 1 as a carbonaceous substrate for denitrification bacteria, to an anaerobic zone in a biological purification step. These and further characteristic features of the invention are defined in the appended specification and claims.

According to the invention, the native starch is modified chemically, physically, or enzymatically, or by a combination of these techniques.

The native starch is modified chemically by acid hydrolysis. Acids preferred are hydrochloric acid, sulphuric acid, nitric acid etc. The acid hydrolysis is carried out at a temperature of 100-170°C, at a pressure of 1-50 bars, and at pH 0-6.

In a preferred embodiment of the invention, the acid hydrolysis is carried out at a temperature of 130-150°C, at a pressure of 25-35 bars, and at pH 1-2.

The physical modification of the starch preferably consists of pre-pasting of native starch, but also other types of physical modification, such as mechanical grinding of starch so as to split the starch granules, are possible. Pre-pasting of starch is a well-known treatment of starch and need not be described in detail. One example is the treatment of native starch in the presence of water at a temperature of 50-200°C for 0-60 min. at a pressure of 1-10 bars. A pre-pasting technique which is preferred according to the invention, implies that pre-pasting is carried out on a hot roller cylinder, whereupon that pre-pasted starch is evaporated and subsequently scraped from the roller cylinder.

In the enzymatic modification, the native starch is treated with enzyme, preferably amylase and/or amyloglycosidase, the carbon chains of the starch being cut open.

After modification, the modified starch is supplied to the anaerobic zone in the biological purification step. The modified starch must be added in a sufficient amount to serve as a substrate for the denitrification bacteria. The content of residual nitrate is measured by routine technique. An amount corresponding to a weight ratio of carbon to nitrogen of at least 1.3 : 1 should be added.

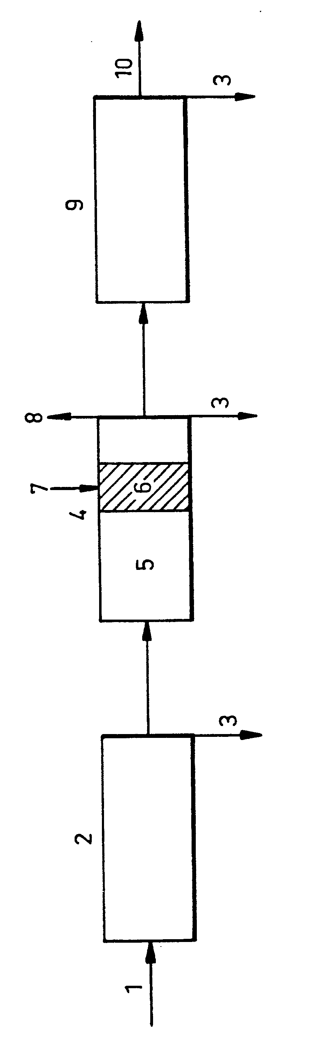

## Description of the drawing

The Figure is a schematic illustration of a sewage treatment plant which comprises a mechanical, a biological and a chemical purification step.

According to the Figure, untreated sewage 1 is introduced into a mechanical purification step 2. Solid impurities are here separated and removed as sludge 3. The mechanically purified water is subsequently introduced into a biological purification step 4. The water is first supplied to an aerobic zone 5 where nitrification bacteria convert nitrogen in the form of ammonium into nitrogen in the form of nitrate. Then the nitrate-containin sewage is supplied to an anaerobic zone 6 to which modified starch in the form of a powder, a sludge or a solution is added as a carbonaceous substrate. In the anaerobic zone, denitrification bacteria convert nitrogen in the form of nitrate into nitrogen gas 8 which is vented to atmosphere. Any undesirable solid material is removed as sludge 3. Then the sewage is conveyed to a chemical purification step 9 in which e.g phosphorus is removed by precipitation reactions. Any undesirable material is removed in the form of sludge 3, while purified water 10 is discharged from the chemical purification step.

In order to further elucidate the invention, an Example follows below in which various carbon sources are tested as a substrate for denitrification bacteria in connection with nitrogen reduction.

## Example

### Investigating the effect of carbon sources on the rate of denitrification

In a sewage treatment plant, different carbon sources were tested in connection with denitrification. To a 5-litre beaker provided with a stirrer, normal sewage was supplied which was then made anaerobic, either by adding bisulphite or by stirring. A number of carbon sources were added to this anaerobic liquid, whereupon the nitrate content was analysed immediately and again after 12 h. The following values were measured.

| Carbon source | $NO_3$ content immediately after adding of carbon | $NO_3$ content after 12 h. |
|---|---|---|
| Methanol | 40.3 mg/l | 19.8 mg/l |
| Sugar | 39.8 mg/l | 0.4 mg/l |
| Lygel F 60 | 40.4 mg/l | 0.1 mg/l |
| Glucose | 39.7 mg/l | 15.2 mg/l |
| Potato-starch | 38.3 mg/l | 24.6 mg/l |

The results show that Lygel F 60, a modified cold-water-soluble form of starch, functions as satisfactorily as sugar with regard to the bacterial accessibility. Glucose, starch sirup, has as high bacterial accessibility as methanol which is a common carbon source in various denitrification experiments. A carbon source of potato-starch (native starch) did not function.

## Claims

1. A method for water purification with removal of nitrogen-containing material by denitrification, **characterised** in that native starch is modified chemically by acid hydrolysis, fysically by pre-pasting or enzymatically by treatment with the enzyme amylase and/or amyloglycosidase, or by a combination of these techniques, and that the modified starch is added in an amount giving a weight ratio of carbon to nitrogen of at least 1.3 : 1 as a carbonaceous substrate for denitrification bacteria, to an anaerobic zone in a biological purification step.

2. A method as claimed in claim 1, **characterised** in that the acid hydrolysis is carried out by means of hydrochloric acid, sulphuric acid or nitric acid.

3. A method as claimed in claim 1 or 2, **characterised** in that the acid hydrolysis is carried out at a temperature of 100-170°C, preferably 130-150°C, at a pressure of 1-50 bars, preferably 25-35 bars, and at pH 0-6, preferably 1-2.

4. A method as claimed in claim 1, **characterised** in that the physical modification is carried out at a temperature of 50-200°C, preferably 120-140°C, and for 0-60 min., preferably 1-2 min.

5. A method as claimed in claim 4, **characterised** in that the physical modification includes pre-pasting of the starch on a hot roller cylinder, evaporation of the pre-pasted starch and scraping the prepasted powder from the roller cylinder.

## Patentansprüche

1. Verfahren zur Wasserklärung unter Entfernung von stickstoffhaltigem Material durch Denitrifikation, dadurch **gekennzeichnet**, dass natürliche Stärke chemisch durch Säurehydrolyse, physikalisch durch Vorkleben oder enzymatisch durch Behandlung mit dem Enzym Amylase und/oder Amyloglucosidase oder durch eine Kombination dieser Methoden modifiziert wird, und dass die modifizierte Stärke in einer Menge zugeführt wird, die ein Gewichtsverhältnis von Kohlenstoff zu Stickstoff von mindestens 1,3 : 1 als ein kohlenstoffhaltiges Substrat für Denitrifikationsbakterien einer anaeroben Zone in einer biologischen Klärstufe ergibt.

2. Verfahren nach Anspruch 1, dadurch **gekennzeichnet**, dass die Säurehydrolyse mittels Chlorwasserstoffsäure, Schwefelsäure oder Salpetersäure ausgeführt wird.

3. Verfahren nach Anspruch 1 oder 2, dadurch **gekennzeichnet**, dass die Säurehydrolyse bei einer Temperatur von 100-170°C, vorzugsweise 130-150°C, einem Druck von 1-50 Bar, vorzugsweise 25-35 Bar, und einem pH von 0-6, vorzugsweise 1-2, ausgeführt wird.

4. Verfahren nach Anspruch 1, dadurch **gekennzeichnet**, dass die physikalische Modifikation bei einer Temperatur von 50-200°C, vorzugsweise 120-140°C, während 0-60 Minuten, vorzugsweise 1-2 Minuten, ausgeführt wird.

5. Verfahren nach Anspruch 4, dadurch **gekennzeichnet**, dass die physikalische Modifikation das Vorkleben der Stärke auf einer warmen Walze, das Verdampfen der vorgeklebten Stärke und das Abkratzen des vorgeklebten Pulvers von der Walze umfasst.

## Revendications

1. Procédé d'épuration de l'eau comprenant l'élimination par dénitrification des matières azotées, caractérisé en ce que de l'amidon natif est modifié chimiquement par hydrolyse acide, physiquement par pré-empâtage ou enzymatiquement par traitement par les enzymes amylase et/ou aminoglucosidase ou par une association de ces techniques et que l'amidon modifié est ajouté en une quantité donnant un rapport pondéral du carbone à l'azote d'au moins 1,3 : 1 en tant que substrat carboné pour les bactéries de dénitrification, dans une zone anaérobie au cours d'une étape d'épuration biologique.

2. Procédé selon la revendication 1, caractérisé en ce que l'hydrolyse acide est opérée au moyen d'acide chlorhydrique, d'acide sulfurique ou d'acide nitrique.

3. Procédé selon la revendication 1 ou 2, caractérisé en ce que l'hydrolyse acide est opérée à une température de 100 à 170°C, de préférence 130 à 150°C, à une pression de 1 à 50 bars, de préférence 25 à 30 bars et à un pH de 0 à 6, de préférence 1 à 2.

4. Procédé selon la revendication 1, caractérisé en ce que la modification physique est opérée à une température de 50 à 200°C, de préférence 120 à 140°C, et pendant 0 à 60 min, de préférence 1 à 2 min.

5. Procédé selon la revendication 4, caractérisé en ce que la modification physique comprend le pré-empâtage de l'amidon sur un rouleau presseur à chaud, l'évaporation de l'amidon pré-empâté et la récupération de la poudre pré-empâtée par grattage du rouleau presseur.